Europäisches Patentamt

European Patent Office

Office européen des brevets

(11) Publication number: **0 265 942 B1**

# EUROPEAN PATENT SPECIFICATION

(45) Date of publication of patent specification: **26.08.92**  (51) Int. Cl.⁵: **G03G  15/08**

(21) Application number: **87115899.4**

(22) Date of filing: **12.04.84**

(60) Publication number of the earlier application in accordance with Art.76 EPC: **0 125 497**

(54) **Elektrostatic copying apparatus.**

(30) Priority: **12.04.83 JP 63051/83**

(43) Date of publication of application:
**04.05.88 Bulletin  88/18**

(45) Publication of the grant of the patent:
**26.08.92 Bulletin  92/35**

(84) Designated Contracting States:
**DE FR GB NL**

(56) References cited:
**EP-A- 0 125 606       EP-A- 0 126 165**
**EP-A- 0 131 957       DE-A- 2 808 587**
**DE-A- 3 031 593       DE-A- 3 218 801**
**DE-A- 3 225 883       FR-A- 2 458 101**
**US-A- 3 656 509       US-A- 4 150 892**
**US-A- 4 174 050**

**IBM TECHNICAL DISCLOSURE BULLETIN, vol. 17, no. 4, September 1974, pages 1129,1130, New York, US; G.L. COX et al.: "Toner replenisher clutch"**

(72) Inventor: **Iida, Kazumi**
**3-3-1 Miyakenaka**
**Matsubara-shi Osaka-fu(JP)**
Inventor: **Ohata, Yosuke**
**1-10-4 Nishiura**
**Habikino-shi Osaka-fu(JP)**
Inventor: **Hyodo, Keiichiro**
**3-19-3-201 Nishi Okamoto Higashi Nada-ku**
**Kobe-shi Hyogo-ken(JP)**
Inventor: **Akiyama, Kazunori**
**6-16-12 Tonda-cho**
**Takatsuki-shi Osaka-fu(JP)**
Inventor: **Umeda, Tadashi**
**307 Jinraku**
**Yamato Takada-shi Nara-ken(JP)**
Inventor: **Kishimoto, Keiichi**
**1498-1 Oaza Abe, Koryo-cho Kita**
**Katsuragi-gun Nara-ken(JP)**

(74) Representative: **Patentanwälte Beetz sen. - Beetz jun. Timpe - Siegfried - Schmitt-Fumian**
**Steinsdorfstrasse 10**
**W-8000 München 22(DE)**

(73) Proprietor: **MITA INDUSTRIAL CO. LTD.**
**2-28, 1-chome, Tamatsukuri Higashi-ku**
**Osaka 540(JP)**

## Description

This invention relates to a device for developing a latent electrostatic image as mentioned in the preamble portion of claim 1.

Such a device for developing a latent electrostatic image is known from DE-A-3 031 593.

A developing device of the type in which a so-called two-component developer composed of carrier particles and toner particles has been widely used in practice as the aforesaid developing device. Such a type of developing device has the following problems.

In order to maintain the ratio between the carrier particles and the toner particles in the developer at a certain required value by supplying the toner particles as the toner particles are consumed, it is important to control the supplying of the toner particles by detecting a characteristic of the developer corresponding to the aforesaid ratio, for example its inductance. However, depending upon the detecting position, etc., the characteristic of the developer cannot always be properly detected.

It is desired to mix the developer fully and make it sufficiently uniform also in the widthwise direction of the developing device. But this desire cannot be fully achieved.

DE-A-3 031 593 discloses a device for developing a latent electrostatic image comprising a developer receptacle for holding a developer composed of carrier particles and toner particles, a developer applicator means for holding a part of the developer in the developer receptable on its surface in a developer drawing zone and for carrying the developer to a developing zone, a brush length-adjusting member for removing the excess of the developer from the surface of the developer applicator means disposed at a predetermined distance from the surface of the developer applicator means in a brush length-adjusting zone located downstream of the developer drawing zone and upstream of the developing zone as viewed in the moving direction of the developer carried while being held on the surface of the developer applicator means, a developer agitating means disposed in relation to a developer removing zone located downstream of the developing zone and upstream of the developer drawing zone as viewed in the moving direction of the developer and the upstream end portion of the developer drawing zone as viewed in the moving direction of the developer, a toner particle receptacle for holding toner particles, a toner particle feed means adapted to be selectively actuated for feeding toner particles to the developer receptacle from the toner particle receptacle, and a contact-type developer detector having a developer-contacting surface; wherein the moving path of the developer carried while being held on the surface of the developer applicator means is gradually raised from the upstream end of the developer drawing zone to the upstream side of the brush length-adjusting zone as viewed in the moving direction of the developer, a partitioning plate is provided extending above the moving path of the developer from above the developer agitating means to the upstream side of the brush length-adjusting zone so that the developer removed from the surface of the developer applicator means by the action of the brush length-adjusting member in the brush length-adjusting zone is conducted onto the partitioning plate and flows over it and finally down into the developer agitating means and the developer-contacting surface of the developer detector is positioned such that the developer removed from the surface of the applicator means by the action of the brush length-adjusting member and conducted onto the partitioning plate contacts the developer-contacting surface.

It is the object of this invention to provide a latent electrostatic image developing device in which a developer is fully mixed and made uniform also in the widthwise direction of the developing device.

The object is solved by the features of the main claim, further advantageous developments of the invention are described in the dependent claims.

Advantages of this invention will become apparent from the following description of embodiments of the invention.

Figure 1 is a simplified longitudinal sectional view showing one embodiment of the electrostatic copying apparatus constructed in accordance with this invention;

Figure 2 is a simplified cross sectional view of the electrostatic copying apparatus of Figure 1;

Figure 3 is a simplified view showing a driving system of the electrostatic copying apparatus of Figure 1;

Figure 4 is a simplified view showing a part of the driving system of Figure 3;

Figure 5 is a sectional view showing a developing device in the eletrocstatic copying apparatus of Figure 1;

Figure 6 is a perspective view, partly broken away, of a rotary stirring mechanism and a partitioning plate of the developing device of Figure 5;

Figure 7 is a top plan view of a part of the partitioning plate and the rotary stirring mechanism of the developing device of Figure 5;

Figure 8 is a rear view of the developing device of Figure 5;

Figure 9 is an exploded perspective view showing some constituent elements of means for controlling a toner particle supplying roller used in the developing device of Figure 5.

## DETAILED DESCRIPTION OF PREFERRED EMBODIMENTS

### Outline of the copying apparatus as a whole

The entire structure of one embodiment of the electrostatic copying apparatus which has been improved in various respects in accordance with this invention will first be described.

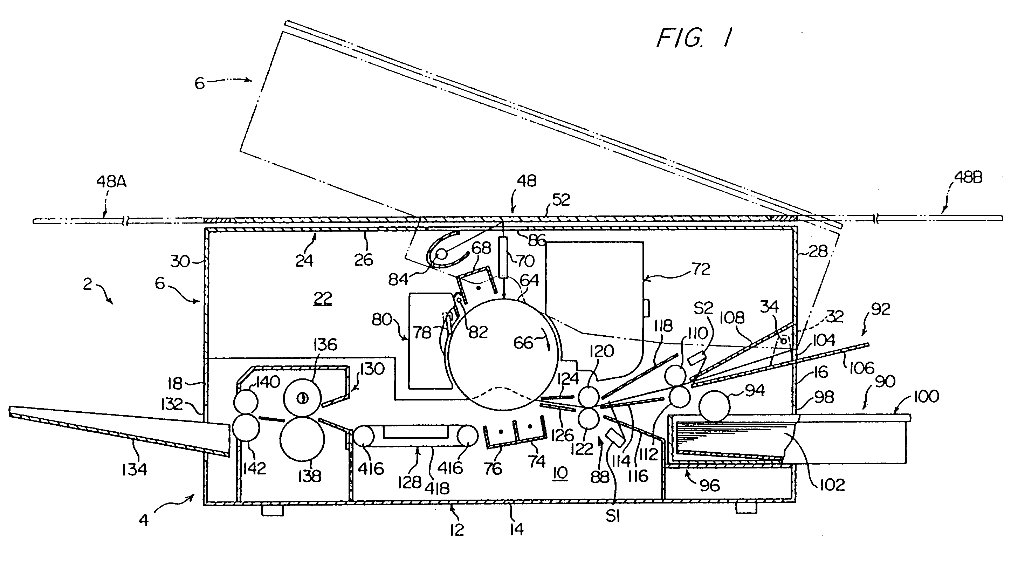

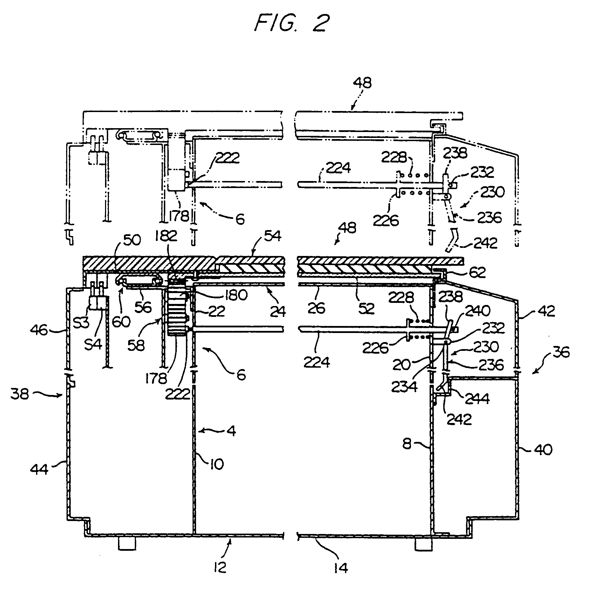

With reference to Figure 1, the illustrated copying apparatus has a nearly rectangular parallelpipedal housing shown generally at 2. The housing 2 is defined by a lower supporting frame 4 and an upper supporting frame 6. With reference to Figure 2 together with Figure 1, the lower supporting frame includes a vertical front base plate 8 and a vertical rear base plate 10 disposed with a predetermined distance therebetween in the front-rear direction (a direction perpendicular to the sheet surface in Figure 1, and the left-right direction in Figure 2), and a bottom plate 12 fixed to the lower ends of these plates. The bottom plate 12 has a bottom wall portion 14 defining the bottom surface of the housing 2 and lower surface wall portions 16 and 18 defining the nearly lower half portions of the two side surfaces of the housing 2. On the other hand, the upper supporting frame 6 includes a vertical front base plate 20 and a vertical rear base plate 22 disposed with a predetermined distance therebetween in the front-rear direction and a top plate 24 fixed to the upper ends of these plates. The top plate 24 has a top wall portion 26 defining the top surface of the housing 2 and upper surface wall portions 28 and 30 defining the nearly upper half portions of the two side surfaces of the housing 2. The upper supporting frame 6 is mounted on the lower supporting frame 4 so that it can pivot freely between a closed position shown by solid lines in Figures 1 and 2 and an open position shown by two-dot chain lines in Figures 1 and 2. More specifically, upwardly extending supporting projections 32 are provided at the right end portions of the vertical front base plate 8 and the vertical rear base plate 10 of the lower supporting frame 4, and the vertical front base plate 20 and the vertical rear base plate 22 of the upper supporting frame 6 are pivotally mounted on these supporting projections 32 through a shaft 34. Normally, the upper supporting frame 6 is locked in the closed position shown by the solid lines in Figures 1 and 2 by a suitable locking mechanism (not shown), but as required, can be pivoted to the open position shown by the two-dot chain lines in Figures 1 and 2 with the shaft 34 as a center by cancelling the locking action of the locking mechanism.

In the illustrated copying apparatus, there are also provided a front cover 36 covering the front surface of the housing 2 and a rear cover 38 for covering the rear surface of the housing 2, as shown in Figure 2. The front cover 36 is comprised of a lower front cover 40 fixed to the lower supporting frame 4 and an upper front cover 42 fixed to the upper supporting frame 6. Likewise, the rear cover 38 is comprised of a lower rear cover 44 fixed to the lower supporting frame 4 and an upper rear cover 46 fixed to the upper supporting frame 6. Accordingly, when the upper supporting frame 6 is moved from the closed position to the open position, approximately the upper half portions of the front cover 36 and the rear cover 38, i.e. the upper front cover 42 and the upper rear cover 46, can be moved to the open position in the same way.

A document placing means shown generally at 48 is disposed on the top surface of the housing 2 so that it can reciprocate freely in the left-right direction in Figure 1 or a direction perpendicular to the sheet surface in Figure 2. As clearly shown in Figure 2, the document placing means 48 which may be in a form known per se includes a supporting base plate 50, a transparent plate 52 fixed to the supporting base plate 50, and a document cover 54 (omitted in Figure 1) whose rear edge (left edge in Figure 2) is pivotably mounted on the supporting base plate 50 by a suitably mechanism (not shown). With reference to Figure 2, the method of mounting the document placing means 48 will be described. A supporting member 58 having a horizontal portion 56 is fixed to the rear surface of the vertical rear base plate 22 of the upper supporting frame 6, and between the horizontal portion 56 of the supporting member 58 and the supporting base plate 50 of the document placing means 48 is interposed a sliding mechanism 60 (which may conveniently be one commercially available under the tradename "Aculide") extending in the reciprocating direction of the document placing means 48. On the other hand, a guide member 62 having a rearwardly opened guide groove at its upper portion extending upwardly beyond the top surface of the housing 2 is fixed to the front surface of the vertical front base plate 20 of the upper supporting frame 6. The front edge portion of the transparent plate 52 of the document placing means 48 is slidably received in the guide groove of the guide member 62. Thus, the document placing means 48 is mounted such that it can freely reciprocate between a start-of-scan position shown by a two-dot chain line 48A in Figure 1 and a scan movement limit position shown by a two-dot chain line 48B in Figure 1.

With reference to Figure 1, a rotating drum 64 having a photosensitive member on its peripheral surface is rotatably mounted nearly centrally within the housing 2. Areound the rotating drum 64 adapted to be rotated in the direction of an arrow 66 are disposed a charging corona discharge device 68, an optical unit 70, a latent electrostatic image developing device 72, a transferring corona discharge device 74, a peeling corona discharge device 76, a cleaning device 80 having a cleaning blade 78 and a charge elemeinating lamp 82 in this sequence in the rotating direction of the drum 64. In relation to the optical unit 70, a document illuminating lamp 84 is also provided. The document illuminating lamp 84 illuminates a document (not shown) to be copied, placed on the transparent plate 52 of the document placing means 48, through an opening 86 formed at the top wall portion 26 of the top plate 24. The optical unit 70 is constructed by arranging many elongate optical elements extending in the vertical direction (for example, rod-like lenses sold under the tradename "Selfox Microlense" by Nippon Sheet Glass Co., Ltd.), and as shown by an arrow in Figure 1, projects the reflected light from the document onto the peripheral surface of the rotating drum 64.

A sheet material conveying device shown generally at 88 is disposed in the nearly lower half portion of the housing 2. At one end (the right end in Figure 1) of the sheet material conveying device 88 are provided a cassette-type copying paper feed device 90 and a manual sheet feed device 92. The copying paper feed device 90 consists of a combination of a paper cassette receiving section 96 having a feed roller 94 provided therein and a paper cassette 100 to be loaded in the paper cassette receiving section 96 through an opening 98 formed on the right side surface of the housing 2 (more specifically the right side lower surface wall portion 16 of the bottom plate 12), and feeds copying paper sheets one by one from a copying sheet layer 102 accommodated in the cassette 100 by the action of the feed roller 94. The manual feed device 92 includes a guide plate 106 protruding outwardly through an opening 104 formed in the right side surface of the housi ng 2, a guide plate 108 located above the guide plate 106, and a pair of feed rollers 110 and 112 located downstream of (on the left in Figure 1) the guide plates 106 and 108. When a suitable sheet material such as a sheet-like copying paper is positioned on the guide plate 106 and advanced to the nipping position of the feed rollers 110 and 112, these feed rollers 110 and 112 nips the sheet material and feeds it. The copying paper fed from the copying paper feed device 90 between the guide plates 114 and 116 or the sheet material fed from the manual feed device 92 between the guide plates 114 and 118 is passed between guide plates 124 and 126 by the action of a pair of conveying rollers 120 and 122 and conveyed to a position between the rotating drum 64 and the transferring corona discharge device 74 and the peeling corona discharge device 76. Then, by the action of a suitable conveying belt mechanism 128, it is sent to a fixing device 130. Thereafter, it is discharged into a receiving tray 134 through an opening 132 formed in the left side surface of the housing 2 (more specifically, the left side lower surface wall portion 18 of the bottom plate 12). The fixing device 130 includes a fixing roll pair comprised of an upper roller 136 and a lower roller 138 cooperating with each other (the structure of the fixing device 130 will be described in detail hereinafter). The sheet material from the fixing roller is discharged into the receiving tray 134 by the action of a pair of discharge rollers 140 and 142.

Thus, it will be easily understood with reference to Figure 1 that the guide plate 108, the feed roller 110, the guide plate 118, the conveying roller 120 and the guide plate 124 in the sheet material conveying device 88 are mounted on the upper supporting member 6 together with the rotating drum 64, the charging corona discharge device 68, the optical unit 70, the developing device 72, the cleaning means 80, the charge eliminating lamp 82 and the document illuminating lamp 84. On the other hand, the copying paper feed device 90, the guide plate 106, the feed roller 112, the guide plate 114, the guide plate 116, the conveying roller 122, the guide plate 126, the transferring corona discharge device 74, the peeling corona discharge device 76, the conveying belt mechanism 128, the fixing device 130 and the receiving tray 134 are mounted on the lower supporting frame 4. Accordingly, when the upper supporting frame 6 is moved from the closed position shown by the solid line to the open position shown by the two-dot chain line, most of the conveying passage for the sheet material is opened, and therefore in the event of jamming, the sheet material can be easily taken out from it.

In the copying apparatus described above, the charging corona discharge device 68 charges the photosensitive member to a specified polarity substantially uniformly while the rotating drum is rotated in the direction of arrow 66. Then, the image of the document is projected onto the photosensitive member through the optical unit 70 (at this time, the document placing means 48 makes a scanning exposure movement to the right in Figure 1 from the start-of-scan position shown by the two-dot chain line 48A in Figure 1) to form on the photosensitive member a latent electrostatic image corresponding to the document. Thereafter, the developing device 72 applies toner particles to the latent electrostatic image on the photosensitive member to develop it to a toner image. Subsequently, a sheet material such as copying paper fed from the copying paper feed device 90 or the manual sheet feed device 92 is brought into contact with the photosensitive member, and by the action of the transferring corona discharge device 74, the toner image on the photosensitve member is transferred to the sheet material. The sheet material is then peeled off from the photosensitive member by the action of the peeling corona discharge device 76. The sheet material having the toner image transferred thereto is then conveyed to the fixing device 130 where the toner image is fixed. The sheet material having the fixed toner image is then discharged into the receiving tray 134. In the meantime, the rotating drum 64 continues to rotate. The residual toner particles are removed from the photosensitive member by the action of the cleaning device 80, and the residual charge on the photosensitive member is erased by the action of the charge eliminating lamp 82.

Driving system

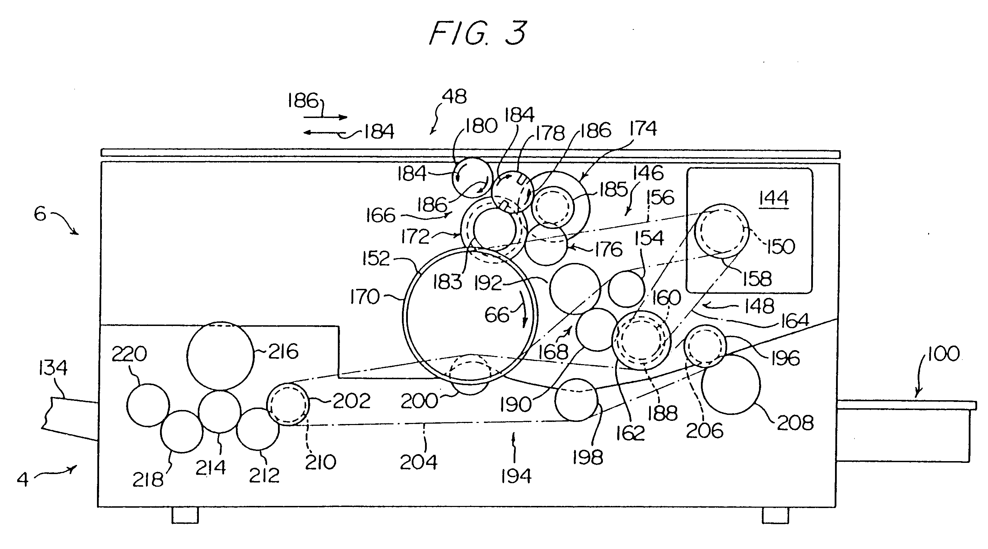

With reference to Figure 3 in conjunction with Figure 1, the driving system in the illustrated copying apparatus will be described in summary.

In the illustrated copying apparatus, a driving source 144 which may be an electric motor is provided in the upper supporting frame 6. In relation to the driving source 144, a power transmission mechanism 146 for the rotating drum and an interlocking power transmission mechanism 148 are provided in the upper supporting frame 6. The power transmission mechanism 146 for the rotating drum includes a toothed pulley 150 fixed to the output shaft of the driving source 144, a toothed pulley 152 linked to the rotating drum 64, a rotatably mounted tensioning toothed pulley 154, and a timing belt 156 wrapped about these toothed pulleys 150, 152 and 154. The interlocking power transmission mechanism 148 includes a sprocket wheel 158 fixed to the output shaft of the driving source 144, a rotatably mounted sprocket wheel 160, a sprocket wheel 162 mounted coaxially, and rotatably as a unit, with the sprocket wheel 160, and a chain 164 wrapped about the sprocket wheels 158 and 160.

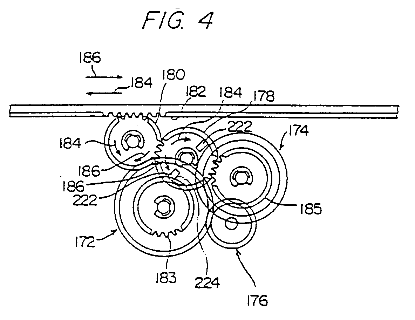

The upper supporting frame 6 further has provided therein a power transmission mechanism 166 for the document placing means and a power transmission mechanism 168 for the developing device. The power transmission mechanism 166 for the document placing means includes a gear 170 mounted coaxially with, and rotatably as a unit with, the toothed pulley 152 in the power transmission mechanism 146 for the rotating drum, a double clutch means 176 comprising a clutch means 172 for normal motion and a clutch means 174 for reverse motion, a gear 178, a pinion gear 180, and a rack 182 (Figures 2 and 4) fixed to the lower surface of the supporting base plate 50 of the document placing means 48. With reference to Figures 3 and 4 in conjunction with Figure 1, the clutch means 172 for normal motion has an input gear 183 in mesh with the gear 170, and the clutch means 174 for reverse motion has an output gear 185 in mesh with the gear 178. The double clutch means 176 comprised of the clutch means 172 and 174 may be substantially the same as the double electromagnetically controlled spring clutch mechanism disclosed in the specification and drawings of co-pending Japanese Patent Application No. 47120/1983 entitled "Electromagnetically Controlled Spring Clutch Mechanism" filed March 23, 1983. Accordingly, the specification and drawings of the above application are cited as reference instead of giving a detailed description of the structure of the double clutch means 176.

The gear 178 is engaged with the pinion gear 180, and the pinion gear 180 is engaged with the rack 182 extending in the reciprocating direction (the left-right direction in Figures 1, 3 and 4) of the document placing means 48. When the driving source 144 is energized and the gear 170 is rotating in the direction of arrow 66, actuation of the clutch means 172 for normal motion causes the gear 178 and the pinion gear 180 to rotate in the direction shown by an arrow 184, and consequently the document placing means 48 is moved at a predetermined speed V in the direction of arrow 184. On the other hand, when the clutch means 174 for reverse motion is actuated at this time, the gear 178 and the pinion gear 180 are rotated in the direction of an arrow 186, and consequently, the document placing means 48 is moved at a speed double the speed V, i.e. 2V, in the direction of arrow 186.

The power transmission mechanism 168 for the developing device 168 includes a gear 188 rotated coaxially with, and rotatably as a unit with, the sprocket wheels 160 and 162 in the interlocking power transmission mechanism 148, a gear 190 engaged with the gear 188 and a gear 192 engaged with the gear 190. The gear 190 is connected to a sleeve member (to be described hereinafter) provided in the developing device 72.

A power transmission mechanism 194 which has to do with the conveying of a sheet material is mounted on the lower supporting frame 4. The power transmission mechanism 194 includes sprocket wheels 196, 198, 200 and 202 and a chain 204 wrapped about these sprocket wheels 196, 198, 200 and 202. The sprocket wheel 196 is connected to the feed roller 112 (Figure 1). The sprocket wheel 196 also has provided therein a gear 206 coaxially, and rotatably as a unit, with the sprocket wheel 196. A gear 208 is engaged with the gear 206, and the gear 208 is connected to the feed roller 94 (Figure 1) in the paper feed device 90 through a suitable clutch means (not shown) electromagnetically controlled. The sprocket wheel 198 is connected to the conveying roller 122 through a suitable electromagnetically controlled clutch means (not shown). The sprocket wheel 200 is provided so as to keep the chain 204 taut. The sprocket wheel 202 is connected to a driven roller 416 (Figure 1) in the conveying belt mechanism 128. The sprocket wheel 202 has attached thereto a gear 210 coaxial, and rotatably as a unit, with it. A gear 212 is in mesh with the gear 210, and a gear 214 is in mesh with the gear 212. A gear 216 and a gear 218 are kept in mesh with the gear 214, and a gear 220, with the gear 218. The gear 216 is linked to the upper roller 136 (Figure 1) of the fixing device 130, and the gear 220, to a discharge roller 142.

It will be readily understood from Figures 1 and 3 that when the upper supporting frame 6 is held at the closed position, the sprocket wheel 162 of the interlocking power transmission mechanism 148 provided in the upper supporting frame 6 is engaged with the chain 204 of the power transmission mechanism 194 provided in the lower supporting frame 4 and consequently, the driving source 144 is drivingly connected to the power transmission mechanism 194 through the interlocking power transmission mechanism 148. On the other hand, when the upper supporting frame 6 is moved to the open position shown by the two-dot chain line in Figure 1, the sprocket wheel 162 of the interlocking power transmission mechanism 148 is brought out of engagement with the chain 204 of the power transmission mechanism 194.

Latent electrostatic image developing device

Now, a detailed description will be made of the structure of the developing device 72 for applying toner particles to a latent electrostatic image formed on the photosensitive member on the peripheral surface of the rotating drum 64 to develop it to a toner image.

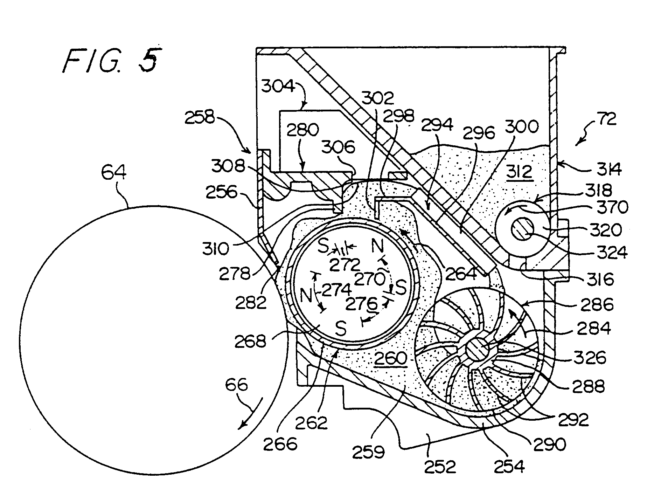

With reference to Figure 5, the illustrated developing device 72 includes a development housing 258 defined by a front and a rear wall 252 (only the rear wall is shown in Figure 5) spaced from each other in the front-rear direction (a direction perpendicular to the sheet surface in Figure 5), a recessed bottom wall 254 and a side wall 256. The lower portion of the development housing 258 defines a developer receptacle 259 for accomodating a two-component developer 260 composed of carrier particles and toner particles.

A developer applicator means 262 is disposed within the development housing 258. The developer applicator means 262 in the illustrated embodiment is comprised of a cylindrical sleeve member 266 adapted to be rotated in the direction of an arrow 264 and a stationary permanent magnet 268 disposed within the sleeve member 266. The stationary permanent magnet 268 is in roll form, and has a plurality of magnetic poles circumferentially spaced from each other at its peripheral edge portion ( three S poles and two N poles therebetween).

Around the sleeve member 266 of the developer applicator means 262, a developer drawing zone 270, a brush length-adjusting zone 272, a developing zone 274 and a developer removing zone 276 are located in this order as viewed from the rotating direction of the sleeve member 266 shown by an arrow 264. The developer drawing zone 270 is disposed in one side portion (the right side portion in Figure 5) of the sleeve member 266, and the brush length-adjusting zone 272 is provided in approximately the topmost portion of the sleeve member 266. The developing zone 274 is disposed in the other side portion (the left side portion in Figure 5) of the sleeve member 266. Conveniently, the developer removing zone 276 is provided in the one side portion of the sleeve member 266 and below the developer drawing zone 270.

A brush length-adjusting member 278 is provided in the brush length-adjusting zone 272. In the illustrated embodiment, a suspended piece extending downwardly from the under surface of a member 280 secured to the inner surface of the side wall 256 forms the brush length-adjusting member 278. The tip of the brush length-adjusting member is in proximity to the sleeve member 266 in its circumferential direction with some clearance which may, for example, be about 1 mm. In the developing zone 274, the peripheral surface of the sleeve member 266 faces the peripheral surface of the rotating drum 64 with some clearance through an opening 282 defined between the lower end edge of the side wall 256 and one edge of the bottom wall 254.

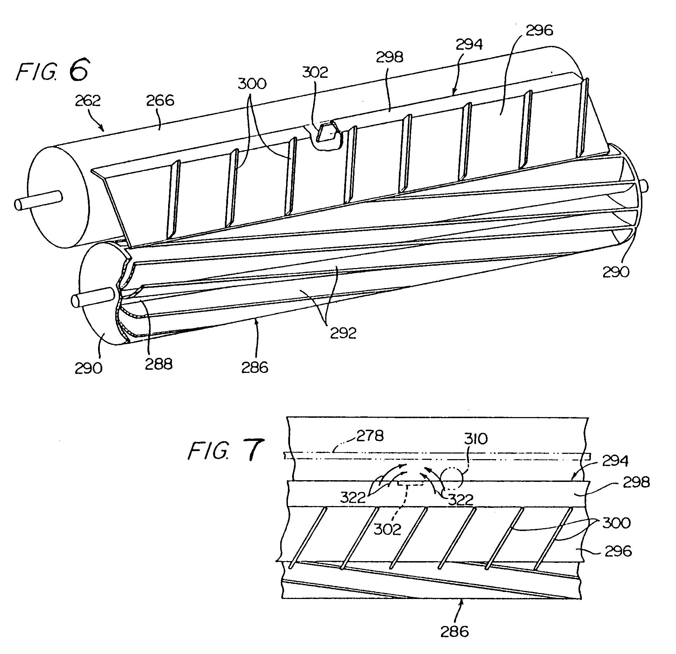

Within the development housing 258, there is disposed a developer agitating means comprised of a rotary agitating mechanism 286 adapted to be rotated in the same direction as the rotating direction of the sleeve member 266 shown by the arrow 264. As is clear from Figure 5, the rotary agitating mechanism 286 is positioned so as to adjoin the sleeve member 266 in a region ranging from the developer removing zone 276 to the developer drawing zone 270. With reference to Figure 6 taken in conjunction with Figure 5, the illustrated rotary agitating mechanism 286 has a rotating shaft portion 288 extending substantially parallel to the axis of rotation of the sleeve member 266, circular end plate portions 290 fixed respectively to the opposite end portions of the rotating shaft portion 288, and a plurality of (12 in the illustrated embodiment) agitating blade portions 292 extending between the two end plate portions 290 at circumferentially spaced positions. Each of the agitating blade portions 292 in the radial direction extends from its inside end connected to the rotating shaft portion 288 to its outside end in a concave shape. In the front-rear direction (a direction perpendicular to the sheet surface in Figure 5), it extends from its front end side to its rear end side while it is inclined on the upstream side as viewed in the rotating direction shown by an arrow 284.

A partitioning plate 294 is also provided in the development housing 258. The illustrated partitioning plate 294 has an inclined portion 296 extending upwardly from its lower end located above the rotary agitating mechanism 286 while it is inclined to the left in Figure 5, and a horizontal upper end portion 298 extending from this inclined portion 296 substantially horizontally to the left in Figure 5. The horizontal upper end portion 298 is located somewhat upstream of the brush length-adjusting zone 272 in which the brush length-adjusting member 278 is located. As clearly shown in Figure 6, a plurality of (8) in the drawing) guide protrusions 300 spaced from each other in the widthwise direction of the upper surface of the inclined portion 296 (i.e., the front-rear direction perpendicular to the sheet surface in Figure 5) are provided on the upper surface of the inclined portion 296. Each of the guide protrusions 300 is inclined from its rear end toward its front end in the direction of its lower end, i.e. tow ard the rotary agitating mechanism 286. A relatively narrow projecting piece 302 extending downwardly from its nearly intermediate portion in its widthwise direction is provided in the upper edge of the horizontal upper end portion 298 of the partitioning plate 294. The lower end of the projecting piece 302 approximates the peripheral surface of the sleeve member 266 preferably at an angular position at which one of the magnetic poles of the stationary permanent magnet 268 is located, or its vicinity. The distance between the lower end of the projecting piece 302 and the peripheral surface of the sleeve member 266 is smaller than that between the lower end of the brush length-adjusting member 278 and the peripheral surface of the sleeve member 266, and is desirably about 0.5 mm, for example.

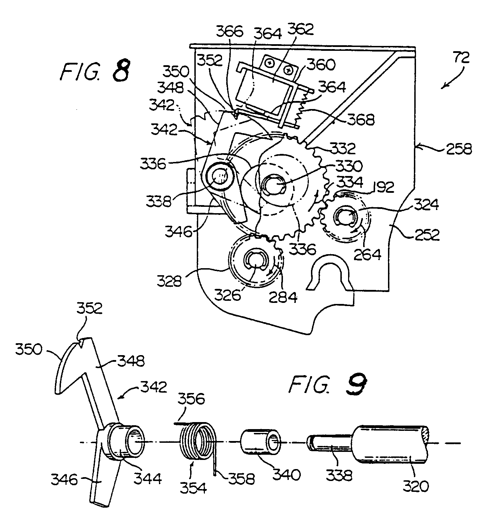

To the top of the member 280 is fixed a contact-type developer detector 304 of a known type which detects the inductance of the developer 260 corresponding to the ratio between the carrier particles and the toner particles. It will be readily understood with reference to Figures 5 and 7 that a circular opening 306 is formed in the member 280, and a circular detecting portion 308 of the developer detector 304 is located in the opening 306. The lower end surface of the circular detecting portion 308 constitutes a developer contacting surface 310, and the developer detector 304 detects the inductance of the developer 260 contacting the developer contacting surface 310. As illustrated in Figure 7, the developer contacting surface 310 is positioned preferably adjacent to the one side of the projecting piece 302 mentioned above as viewed in the widthwise direction (i.e., the front-rear direction).

A toner particle receptacle 314 for accommodating toner particles is disposed in the upper portion of the development housing 258, and a toner particle discharge opening 316 is formed in the lowermost portion of the toner particle receptacle 314. Preferably, the toner particle discharge opening 316 is located above the rotary agitating mechanism 286 and adjacent to the lower end of the paritioning plate 294. A toner particle feed means 318 is annexed to the toner particle discharge opening 316. In the illustrated embodiment, the toner particle feed means 318 is comprised of a toner particle feed roller 320 rotatably mounted just above the toner particle discharge opening 316. Many depressed portions or grooves are formed on the peripheral surface of the toner particle feed roller 320. The toner particle feed roller 320 is selectively rotated in the direction shown by an arrow 370 according to the inductance of the developer detected by the developer detector 304. As a result, toner particles 312 are received in many depressed portions or grooves present on the peripheral surface of the toner particle feed roller 320 and carried to the toner particle discharge opening 316, and then through the toner particle discharge opening 316, are caused to flow onto the rotary agitating mechanism 286. Thus, the toner particles 312 are fed into the developer receptacle 259 from the toner particle receptacle 314. Means for selectively rotating the toner particle feed roller 320 according to the inductance of the developer detected by the developer detector 304 will be described hereinafter.

In the developing device 72 described above, the rotation of the sleeve member 266 of the developer applicator means 262 in the direction of arrow 264 brings about the following actions. With reference to Figure 5, in the developer drawing zone 270, a part of the developer 260 present in the developer receptacle 259 is attracted to, and held on, the peripheral surface of the sleeve member 266 by the magnetic attracting force of the stationary permanent magnet 268. The developer 260 held on the peripheral surface of the sleeve member 266 is gradually raised by the rotation of the sleeve member 266 and carried to the brush length-adjusting zone 272. As will be readily understood from Figure 5, the dev eloper 260 moves below the partitioning plate 294 at this time. Slightly upstream of the brush length-adjusting zone 272 is located the relatively narrow projecting piece 302 approximating the peripheral surface of the sleeve member 266. By the action of the projecting piece 302 upon the developer 260 held on the peripheral surface of the sleeve member 266, a considerable amount of the developer 260 is removed from the peripheral surface of the sleeve member 266 at its central portion in the front-rear direction (the direction perpendicular to the sheet surface in Figure 5) at which the projecting piece 302 exists. As shown by an arrow 322 in Figure 7, however, the developer 260 flows inwardly in the front-rear direction from both sides of the projecting piece 302 downstream of the projecting piece 302, and therefore even at the central portion in the front-rear direction, a considerable amount of the developer 260 is held on the peripheral surface of the sleeve member 266. The advantage obtained by the flowing of the developer 260 in the direction of arrow 322 which is caused by the projecting piece 302 will be described hereinafter.

In the brush length-adjusting zone, the brush length-adjusting member 278 acts on the developer 260 held on the peripheral surface of the sleeve member 266 to remove the excess of the developer 260 therefrom and adjusts the thickness of the layer of the developer 260 held on the peripheral surface of the sleeve member 266, i.e. the brush length, to a required value. The developer 260 removed from the peripheral surface of the sleeve member by the action of the brush length-adjusting member 278 is conducted to the surface of the horizontal upper end portion 298 of the partitioning plate 294 and then flows over the inclined portion 296 and onto the rotary agitating mechanism 286. The developer 260 which has been removed from the peripheral surface of the sleeve member 266 and introduced into the horizontal upper end portion 298 contacts the developer contacting surface 310 of the developer detector 304, and therefore, the developper detector 304 detects the inductance of the developer 260.

The developer 260 held on the peripheral surface of the sleeve member 266 is then carried to the developing zone 274 by the rotation of the sleeve member 266 and brought into contact with the photosensitive member on the rotating drum 64 rotating in the direction of arrow 66. Consequently, the toner particles in the developer 260 are applied to a latent electrostatic image on the photosensitive member and the image is developed into a toner image.

Subsequently, the developer 260 held on the peripheral surface of the sleeve member 266 is carried to the developer removing zone 276 by the rotation of the sleeve member 266. In the developer removing zone 276, no magnetic pole exists in the stationary permanent magnet, and therefore its magnetic attracting force is extremely small. Moreover, the flow of the developer 260 agitated by the rotary agitating mechanism 286 rotating in the direction of arrow 284 acts on the peripheral surface of the sleeve member 266. Accordingly, the developer 260 is removed from the peripheral surface of the sleeve member 266 in the developer removing zone 276.

The rotary agitating mechanism 286 rotating in the direction of arrow 284 agitates the developer 260 removed from the sleeve member 266 in the developer removing zone 276, the developer 260 flowing onto the rotary agitating mechanism 286 after flowing over the partitioning plate 294, and the toner particles 312 which flow onto the rotary agitating mechanism 286 from the toner particle discharge opening 316 of the toner particle receptacle 314 by the action of the selectively rotated toner particle feed roller 320, and thus. uniformly mixes the carrier particles and the toner particles in the developer 260 and triboelectrically charges the toner particles to a specified polarity. Thereafter, it feeds the developer to the developer drawing zone 270.

As clearly shown in Figures 6 and 7, the plurality of guide protrusions 300 spaced from each other in the widthwise direction are provided on the upper surface of the inclined portion 296 of the partitioning plate 294. Each of the guide protrusions 300 is inclined from its rear end to its front end toward the rotary agitating mechanism 286. Hence, the developer 260 which flows over the partitioning plate 294 and onto the rotary agitating mechanism 286 is moved from its rear end to its front end. On the other hand, each of the plurality of the agitating blade portions 292 provided in the rotatary agitating mechanism 286 extends inclinedly from its front end toward its rear end in the upstream direction as viewed in the rotating direction shown by the arrow 284. Accordingly, the developer 260 carried in the direction of arrow 284 by the rotary agitating mechanism 286 is moved from the front end to the rear end of each agitating blade. Thus, in the illustrated developing device 72, the developer 260 is mixed also in the widthwise direction (i.e., the front-rear direction perpendicular to the sheet surface in Figure 5) and fully made uniform in the widthwise direction as well. It has already been known to mix a developer in the widthwise direction by the action of a combination of a plate-like member having a plurality of inclined guide protrusions on its upper surface and a rotary agitating mechanism. However, in the known technique, the agitating blade portions formed in the rotary agitating mechanism are spaced from each other in the widthwise direction and are helical in shape. Hence, the effect of movement of the developer from one end to the other by the rotary agitating mechanism is not entirely sufficient, and therefore, the mixing of the developer in the widthwise direction is not sufficient. In contrast, in the developing device 72 described above which has been improved in accordance with the present invention, each of the plurality of agitating blade portions 292 provided in the rotary agitating mechanism 286 extends continuously in an inclined manner from one end to the other. For this reason, the developer 260 is moved sufficiently effectively from one end to the other by the action of the rotary agitating mechanism 286, and therefore fully mixed and made uniform in the widthwise direction.

In the illustrated developing device 72, the developer 260 is mixed in the widthwise direction by the combined action of the partitioning plate 294 having the inclined guide protrusions 300 and the rotary agitating mechanism 286 having the special agitating blade portions 292. If desired, instead of this arrangement, it is possible to provide two rotary agitating mechanism having special agitating blade portions side by side and mix the developer in the widthwise direction by the combined action of the two rotary agitating mechanisms. It is of course important in this case that the agitating blade portions in one rotary agitating mechanism should be inclined upstream in the rotating direction from one end to the other and the agitating blade portions in the other rotation rotary agitating mechanism should be inclined downstream in the rotating direction from one end to the other, in order for one rotary agitating mechanism to move the developer from one end to the other and the other rotary agitating mechanism to move it from the other end to one end.

In the aforesaid developing device 72, the following points should also be noted. Specifically, the developer detector 304 should detect the developer 260 which has been sufficiently agitated and mixed. Otherwise, it is impossible to detect a value corresponding to the actual ratio between carrier particles and toner particles in the developer 260. Furthermore, the developer 260 detected by the developer detector 304 should be the one immediately after mixing and should not be the one which has a tendency to reside at a specified locality of the developer receptable. When the developer 260 detected has a tendency to reside at a specified locality of the developer receptacle 259, it will be readily seen that the detector cannot detect the actual ratio which varies with the performance of development. Furthermore, as a matter of course, the contacting of the developer 260 with the developer contacting surface 310 of the developer detector 304 should not adversely affect the developing action. In the developing device 72 described above which has been improved by the present invention, the developer 260 which has been fully agitated and mixed by the rotary agitating mechanism 286, fed to the developer drawing zone 270, carried to the brush length-adjusting zone 272 while being held onto the peripheral surface of the sleeve member 266, removed from the peripheral surface of the sleeve member 266 by the action of the brush length-adjusting member 278 in the brush length-adjusting zone 272, and introduced onto the partitioning plate 294 is brought into contact with the developer-contacting surface 310 of the developer detector 304. Accordingly, the developer 260 which has just been agitated and mixed sufficiently and having substantially the same carrier-toner ratio as the developer 260 carried to the developing zone 274 from the brush length-adjusting zone 272 makes contact with the developer contacting surface of the developer detector 304. Furthermore, the developer 260 to be contacted with the developer-contacting surface 310 of the developer detector 304 while being held on the peripheral surface of the sleeve member 266 is gradually raised from the developer drawing zone 270 to the upstream side of the brush length-adjusting zone 272 against the action of gravity. Then, by the action of the brush length-adjusting member 278, its moving direction is forcibly reversed, and then it is introduced onto the partitioning plate 294. Accordingly, the developer 260 contacting the developer-contacting surface 310 is caused to flow very well without stagnation. Furthermore, in the illustrated embodiment, the projecting piece 302 is provided slightly upstream of the brush length-adjusting zone 272, and owing to the presence of the projecting piece 302, the flow of the developer 260 in the direction of arrow 322 in Figure 7 is forcibly formed, as stated hereinabove. As shown in Figure 7, the developer-contacting surface 310 of the detector 304 is positioned adjacent to one side of the projecting piece 302. Hence, the developer 260 present near the developer-contacting surface 310 flows more accurately under the influence of the flow of the developer 260 shown by arrow 322 in Figure 7. Furthermore, since the developer 260 contacting the developer-contacting surface 310 has been removed from the peripheral surface of the sleeve member 266 by the action of the brush length-adjusting member 278 in the brush length-adjusting zone 272, there is no likelihood that development in the developing zone 274 will be adversely affected by the contacting of the developer 260 with the developer contacting surface 310 of the developer detector 304. For the foregoing reason, the inductance of the developer 260 can be properly detected by the developer detector 304 without adversely affecting the developing zone 274 in the developing device 72 in accordance with this. invention.

The toner particle feed roller control means in the developing device 72 will be described in detail.

This control means controls the rotation of the toner particle feed roller 320 according to the inductance of the developer 260 detected by the developer detector 304, and therefore controls the supplying of toner particles from the toner particle receptacle 314 to the developer receptacle 259 according to variations in the ratio of the carrier particles and the toner particles in the developer, thereby maintaining the ratio of the carrier particles and the toner particles in the developer 260 at a specified value within a required range. With reference to Figures 5 and 8, the rotating shaft 324 to which the sleeve member 266 is fixed projects rearwardly beyond the rear wall 252 of the development housing 258, and the gear 192 already referred to with reference to Figure 3 (i.e., the gear 192 in the power transmission mechanism 168 for the developing device) is fixed to the projecting end portion of the rotating shaft 324. The rotating shaft 326 having the rotary agitating mechanism 286 fixed thereto also projects rearwardly beyond the rear wall 252 of the development housing 258, and a gear 328 is fixed to the projecting end portion of the rotating shaft 326. A short shaft 330 is fixed to the rear wall 252 of the development housing 258, and a gear 332 is rotatably mounted on the short shaft 330. The gear 332 is in mesh with both the gear 192 and the gear 328. Accordingly, when the gear 192 and the sleeve member 266 are rotated in the direction of arrow 264 by the driving force transmitted from the driving source 144 (Figure 3), the gear 332 is rotated in the direction shown by an arrow 334, and the gear 328 and the rotary agitating mechanism 286 are rotated in the direction of arrow 284.

A cam 336 constituting part of the toner particle feed roller control means is also mounted on the short shaft 330 so that it can rotate as a unit with the gear 332. Conveniently, the cam 336 is an eccentric cam formed of a disc mounted eccentrically on the short shaft 330. The rotating shaft 338 to which the toner particle feed roller 320 is fixed also projects rearwardly beyond the rear wall of the toner particle receptacle 314. With reference to Figures 8 and 9 , a one-way clutch 340 known per se is mounted on the projecting end portion of the rotating shaft 338, and a lever member 342 is mounted to the one-way clutch 340. The lever member 342 includes a hub portion 344 to be received about the one-way clutch 340, a cam follower portion 346 extending radially outwardly from the hub portion 344 and a restrained portion 348. The restrained portion 348 is nearly hool-shaped, and its peripheral edge defines an arcuate edge 350 with the central axis of the rotating shaft 338 as a center. A notch 352 is formed in the arcuate edge 350. A spring member 354 which may be a helical spring is received about the hub portion 344 of the lever member 342. One end 356 of the spring means 354 is engaged with one edge of the restrained portion 348 of the lever member 342, and its other end 358, with a suitable engaging projection (not shown) provided in the rear surface of the rear wall 252 of the development housing 258. Thus, the spring means 354 elastically biases the lever member 342 counterclockwise in Figure 8 to cause one side edge of the cam follower portion 346 of the lever member 342 to abut against the peripheral edge of the cam 336. A securing bracket 360 is also fixed to the rear surface of the rear wall of the toner particle receptacle 314. An electromagnetic means 362 which may be a solenoid is secured to the securing bracket 360. Furthermore, a restraining member 364 is mounted on the securing bracket 360 so that it can freely pivot between an operating position shown by a solid line in Figure 8 and a non-operating position shown by a two-dot chain line in Figure 8. One end of the restraining member 364 has formed therein a projection 366 which cooperates with the notch 352 formed in the arcuate edge 350 of the restrained portion 348 of the lever member 342 when the restraining member 364 is at the operating position. A spring means 368 which may be a tension coil spring is stretched across the other end portion of the restraining member 364 and the securing bracket 360. The spring means 368 elastically biases the restraining member 364 to the operating position.

In the toner particle supply roller control means described above, the electromagnetic means 362 is adapted to be energized and deenergized according to the characteristic value of the developer 260 detected by the developer detector 304, and therefore to the ratio of the carrier particles and the toner particles in the developer 260. When the electromagnetic means 362 is energized, the restraining member 364 is pivoted to the non-operating position shown by the two-dot chain line in Figure 8 against the elastic biasing action of the spring means 368. As a result, the projection 366 of the restraining member 364 comes out of engagement with the notch 352 formed in the restrained portion 348 of the lever member 342 and the restraining of the lever member 342 by the restraining member 364 is cancelled. Consequently, the lever member 342 is reciprocated between one limit angular position shown by a solid line in Figure 8 and another limit angular position shown by a two-dot chain line in Figure 8 by the cooperation of the cam 336 rotated in the direction of an arrow 334 with the spring means 354 for elastically contacting the cam follower portion 346 of the lever member 342 with the peripheral edge of the cam 336. When the lever member 342 is pivoted from the other limited angular position to the one limit angular position clockwise in Figure 8, the pivotal movement of the lever member 342 is transmitted to the rotating shaft 338 through the one-way clutch 340, and the toner particle supply roller 320 is rotated in the direction of an arrow 370 (Figure 5). On the other hand, when the lever member 342 is pivoted counterclockwise in Figure 8 from the one limit angular position to the other limit angular position, the one-way clutch 340 does not transmit its pivotal movement to the rotating shaft 338, and therefore, the toner particle supply roller 320 is not rotated. Thus, when the lever member 342 is reciprocally pivoted between the one limit angular position to the other limit angular position, the toner particle supply roller 320 is intermittently rotated in the direction of arrow 370.

When the electromagnetic means 362 is deenergized, the spring means 368 elastically biases the restraining member 364 toward the operating position shown by the solid line in Figure 8, and pushes the projection 366 of the restraining member 364 against the arcuate edge 350 of the restrained portion 348 of the lever member 342. When in this state the lever member 342 is held at the one limit angular position shown by the solid line in Figure 8 at which the largest diameter portion of the cam 336 acts on the cam follower portion 346 of the lever member 342, the restraining member 364 is held at the position shown by a solid line in Figure 8 , and the projection 366 of the restraining member 364 is engaged with the notch 352 formed in the arcuate edge 350 of the restrained portion 348 of the lever member 342. As a result, the lever member 342 is restrained at the aforesaid one limit angular position, and in spite of the rotation of the cam 336, the lever member 342 is not pivoted and therefore the toner particle feed roller 320 is not rotated.

It may be possible in the aforesaid toner particle feed roller controlling means to omit the restraining member 364 and the spring means 368 and cause the electromagnetic means 362 to act directly on the lever member 342 so that when the electromagnetic means 360 is energized the lever member 342 is restrained at the one limit angular position shown by the solid line in Figure 8 . However, this requires a relatively strong and expensive electromagnetic means which restrains the lever member 342 at the one limit angular position directly in resistance to the relatively strong spring means 354 that elastically biases the lever member 342 counterclockwise in Figure 8 and contacts the cam follower portion 346 of the lever member 342 with the peripheral edge of the cam 336. As a result, the toner particle feed roller control means will become relatively expensive. In contrast, in the toner particle feed roller controlling means described above, the electromagnetic means 362 needs only to be able to hold the restraining member 364 at the non-operating position shown by the two-dot chain line in Figure 8 against the elastic biasing force of the spring means 368 which may be relatively weak. Accordingly, the toner particle feed roller controlling means may be one which is relatively weak and inexpensive.

The electrostatic copying apparatus improved in accordance with this invention has been described in detail hereinabove with reference to its preferred embodiments shown in the accompanying drawings. It should be understood however that the invention is not limited to these specific embodiments, and various changes and modifications are possible without departing from the scope of the invention as claimed.

**Claims**

1. A device for developing a latent electrostatic image comprising a developer receptacle (259) for holding a developer composed of carrier particles and toner particles, a developer applicator means (262) for holding a part of the developer in the developer receptacle on its surface in a developer drawing zone (270) and for carrying the developer to a developing zone (274), a brush length-adjusting member (278) for removing the excess of the developer from the surface of the developer applicator means (262) disposed a predetermined distance from the surface of the developer applicator means in a brush length-adjusting zone located downstream of the developer drawing zone and upstream of the developing zone as viewed in the moving direction of the developer carried while being held on the surface of the developer applicator means (262), a developer agitating means (286) disposed in relation to a developer removing zone (276) located downstream of the developing zone and upstream of the developer drawing zone as viewed in the moving direction of the developer and the upstream end portion of the developer drawing zone as viewed in the moving direction of the developer, a toner particle receptacle (314) for holding toner particles, a toner particle feed means (318) adapted to be selectively actuated for feeding toner particles to the developer receptacle (259) from the toner particle receptacle (314), and a contact-type developer detector (304) having a developer-contacting surface (310); wherein the moving path of the developer carried while being held on the surface of the developer applicator means (262) is gradually raised from the upstream end of the developer drawing zone (270) to the upstream side of the brush length-adjusting zone (272) as viewed in the moving direction of the developer, a partitioning plate (294) is provided extending above the moving path of the developer from above the developer agitating means (286) to the upstream side of the brush length-adjusting zone (272) so that the developer removed from the surface of the developer applicator means (262) by the action of the brush length-adjusting member (278) in the brush length-adjusting zone (272) is conducted onto the partitioning plate (294) and flows over it and finally down into the developer agitating means (286) and the developer-contacting surface (310) of the developer detector (304) is positioned such that the developer removed from the surface of the applicator means (262) by the action of the brush length-adjusting member (278) and conducted onto the partitioning plate (294) contacts the developer-contacting surface, characterized in that the partitioning plate (294) has provided therein a relatively narrow projecting piece (302) in proximity to the surface of the developer applicator means (262) upstream of the brush length-adjusting zone (272), and the developer-contacting surface (310) of the developer detector (304) is located adjacent to one side of the projecting piece (302) as viewed in the widthwise direction.

2. The device of claim 1, characterized in that the developer applicator means (262) is comprised of a cylindrical sleeve member (266) adapted to be rotated in a predetermined direction about a substantially horizontally extending axis of rotation as a center, and a magnet (268) disposed within the sleeve member (266).

3. The device of claim 1 or 2, characterized in that the developer drawing zone (270) is located on one side portion of the sleeve member (266), and the brush length-adjusting zone (272) is disposed approximately at the uppermost portion of the sleeve member (266).

4. The device of one of claims 1 to 3, characterized in that the developing zone (274) is located on the other side portion of the sleeve member (266), and the developer removing zone (276) is disposed on said one side portion of the sleeve member (266) and below the developer drawing zone (270).

5. The device of one of claims 1 to 4, characterized in that the developer agitating means is constructed of a rotary agitating mechanism (286) adapted to be rotated in the same direction as the sleeve member (266).

6. The device of claim 5, characterized in that the rotary agitating mechanism (286) has a rotating shaft portion (288) extending substantially parallel to the axis of rotation of the sleeve member (266), end plate portions (290) fixed to the opposite end portions of the rotating shaft portion (288) and a plurality of circumferentially spaced agitating blade portions (292) extending across the end plate portions (290), the agitating blade portions (292) being inclined toward the upstream side in the rotating direction from one end to the other so as to move the developer from one end side of the rotating shaft portion (288) to the other, and a plurality of guide projections (300) spaced from each other in the widthwise direction are provided in the upper surface of the partitioning plate (294), said guide projections (300) being inclined to said other end side toward the rotary agitating mechanism (286) so as to move the developer from said other end side to said one end side.

7. The device of claim 1, characterized in that the distance between the projecting piece (302) and the surface of the developer applicator means (266) is smaller than the distance between the brush length-adjusting member (278) and the developer applicator means (266).

8. The device of one of claims 1 to 7, characterized in that the toner particle receptacle (314) has a toner particle discharge opening (316) located above the developer agitating means (286), and the toner particle feed means (318) is comprised of a toner particle feed roller (320) disposed rotatably in relation to the toner particle discharge opening (316).

9. The device of claim 8, characterized by a toner particle feed roller controlling means including a lever member (342) having a cam follower portion (346) and a restrained portion (348), said lever member (342) being pivotably mounted and connected to the toner particle feed roller (320) via a one-way clutch (340), a cam (336) adapted to be rotated, a first spring means (354) for elastically biasing the lever member (342) in a direction in which the cam follower portion (346) of the lever member (342) is brought into abutment against the peripheral edge of the cam (336), a restraining member (364) mounted for free movement between an operating position at which it engages the restrained portion (348) of the lever member (342) when the lever member reciprocated by the cooperation of the cam (336) and the first spring member (354) is held at a one side limit angular position at which the largest diameter portion of the cam (336) acts on the cam follower portion (346), and a non-operating position at which it moves away from the restrained portion (348) of the lever member (342), a second spring means (368) for elastically biasing the restraining member (364) to the operating position, and an electromagnetic means (362) adapted to be selectively energized to hold the restraining member (364) at the non-operating position against the elastic biasing action of the second spring means (368), the energization of said electromagnetic means (362) being controlled on the basis of a value detected by the developer detector (304).

10. The device of claim 9, characterized in that the restrained portion (348) of the lever member (342) has an arcuate edge (350) having the axis of pivoting of the lever member (342) as a center, the arcuate edge (350) has a notch (352) formed therein, and the restraining member (364) has a projection adapted to be engaged with the notch (352).

**Patentansprüche**

1. Vorrichtung zum Entwickeln eines latenten elektrostatischen Bilds, wobei die Vorrichtung aufweist: einen Entwicklerbehälter (259), der einen aus Trägerteilchen und Tonerteilchen bestehenden Entwickler aufnimmt, eine Entwickleraufbringeinrichtung (262), die einen Teil des Entwicklers in dem Entwicklerbehälter auf ihrer Oberfläche in einer Entwickleranziehzone (270) hält und den Entwickler zu einer Entwicklungszone (274) trägt, ein Bürstenlängen-Einstellelement (278) zum Entfernen von überschüssigem Entwickler von der Oberfläche der Entwickleraufbringeinrichtung (262), das in einem vorbestimmten Abstand von der Oberfläche der Entwickleraufbringeinrichtung in einer Bürstenlängen-Einstellzone angeordnet ist, die abstrom der Entwickleranziehzone und aufstrom der Entwicklungszone liegt, gesehen in der Bewegungsrichtung des Entwicklers, der getragen wird, während er gleichzeitig auf der Oberfläche der Entwickleraufbringeinrichtung (262) gehalten ist, eine Entwicklerrühreinrichtung (286), die relativ zu einer Entwicklerentfernungszone (276), die abstrom der Entwicklungszone und aufstrom der Entwickleranziehzone liegt, gesehen in der Bewegungsrichtung des Entwicklers, und relativ zum aufstromseitigen Teil der Entwickleranziehzone, gesehen in der Bewegungsrichtung des Entwicklers, angeordnet ist, einen Tonerteilchenbehälter (314), der Tonerteilchen aufnimmt, eine Tonerteilchenzuführeinrichtung (318), die so ausgebildet ist, daß sie selektiv aktivierbar ist, um dem Entwicklerbehälter (259) Tonerteilchen aus dem Tonerteilchenbehälter (314) zuzuführen, und einen Entwicklerdetektor (304) vom Kontakttyp mit einer Entwickler-Kontaktfläche (310), wobei die Bewegungsbahn des Entwicklers, der getragen wird, während er gleichzeitig auf der Oberfläche der Entwickleraufbringeinrichtung (262) gehalten ist, allmählich vom aufstromseitigen Ende der Entwickleranziehzone (270) zur Aufstromseite der Bürstenlängen-Einstellzone (272), gesehen in der Bewegungsrichtung des Entwicklers, ansteigt, eine Trennplatte (294) vorgesehen ist, die oberhalb der Bewegungsbahn des Entwicklers von oberhalb der Entwicklerrühreinrichtung (286) zu der Aufstromseite der Bürstenlängen-Einstellzone (272) verläuft, so daß der Entwickler, der durch die Wirkung des Bürstenlängen-Einstellelements (278) in der Bürstenlängen-Einstellzone (272) von der Oberfläche der Entwickleraufbringeinrichtung (262) entfernt wird, auf die Trennplatte (294) geleitet wird und über diese und schließlich nach unten in die Entwicklerrühreinrichtung (286) fließt, und die Entwickler-Kontaktfläche (310) des Entwicklerdetektors (304) so positioniert ist, daß der durch die Wirkung des Bürstenlängen-Einstellelements (278) von der Oberfläche der Aufbringeinrichtung (262) entfernte und auf die Trennplatte (294) geleitete Entwickler die Entwickler-Kontaktfläche berührt, dadurch gekennzeichnet, daß in der Trennplatte (294) ein relativ schmaler vorspringender Teil (302) nahe der Oberfläche der Entwickleraufbringeinrichtung (262) aufstrom der Bürstenlängen-Einstellzone (272) vorgesehen ist und die Entwickler-Kontaktfläche (310) des Entwicklerdetektors (304) angrenzend an eine Seite des vorspringenden Teils (302), gesehen in der Breitenrichtung, angeordnet ist.

2. Vorrichtung nach Anspruch 1, dadurch gekennzeichnet, daß die Entwickleraufbringeinrichtung (262) aus einer zylindrischen Hülse (266) besteht, die in einer vorbestimmten Richtung um eine im wesentlichen horizontal verlaufende Drehachse als Mittelpunkt drehbar ist, und ein Magnet (268) in der Hülse (266) angeordnet ist.

3. Vorrichtung nach Anspruch 1 oder 2, dadurch gekennzeichnet, daß die Entwickleranziehzone (270) an einem Seitenteil der Hülse (266) liegt und die Bürstenlängen-Einstellzone (272) ungefähr am obersten Teil der Hülse (266) liegt.

4. Vorrichtung nach einem der Ansprüche 1-3, dadurch gekennzeichnet, daß die Entwicklungszone (274) am anderen Seitenteil der Hülse (266) liegt und die Entwicklerentfernungszone (276) an dem einen Seitenteil der Hülse (266) und unter der Entwickleranziehzone (270) liegt.

5. Vorrichtung nach einem der Ansprüche 1-4, dadurch gekennzeichnet, daß die Entwicklerrühreinrichtung aus einem rotierenden Rührmechanismus (286) besteht, der in die gleiche Richtung wie die Hülse (266) drehbar ist.

6. Vorrichtung nach Anspruch 5, dadurch gekennzeichnet, daß der rotierende Rührmechanismus (286) aufweist: einen Wellenteil (288), der im wesentlichen parallel zu der Drehachse der Hülse (266) verläuft, Endplattenteile (290), die an den entgegengesetzten Endteilen des Wellenteils (288) befestigt sind, und eine Vielzahl von umfangsmäßig beabstandeten Rührflügelteilen (292), die zwischen den Endplattenteilen (290) verlaufen, wobei die Rührflügelteile (292) zur Aufstromseite in der Drehrichtung von einem Ende zum anderen geneigt sind, um den Entwickler von einer Endseite des Wellenteils (288) zur anderen zu bewegen, und wobei eine Vielzahl von Leitrippen (300), die in Breitenrichtung voneinander beabstandet sind, in der Oberfläche der Trennplatte (294) vorgesehen ist, wobei die Leitrippen (300) zu der anderen Endseite in Richtung des rotierenden Rührmechanismus (286) geneigt sind, um den Entwickler von der anderen Endseite zu der einen Endseite zu bewegen.

7. Vorrichtung nach Anspruch 1, dadurch gekennzeichnet, daß der Abstand zwischen dem vorspringenden Teil (302) und der Oberfläche der Entwickleraufbringeinrichtung (266) kleiner als der Abstand zwischen dem Bürstenlängen-Einstellelement (278) und der Entwickleraufbringeinrichtung (266) ist.

8. Vorrichtung nach einem der Ansprüche 1-7, dadurch gekennzeichnet, daß der Tonerteilchenbehälter (314) eine Tonerteilchenabgabeöffnung (316) aufweist, die über der Entwicklerrühreinrichtung (286) liegt, und die Tonerteilchenzuführeinrichtung (318) aus einer Tonerteilchenzuführrolle (320) besteht, die relativ zu der Tonerteilchenabgabeöffnung (316) drehbar angeordnet ist.

9. Vorrichtung nach Anspruch 8, gekennzeichnet durch eine Tonerteilchenzuführrolle-Steuereinrichtung, die aufweist: einen Hebel (342) mit einem Nockenfolger (346) und einem gehemmten Teil (348), wobei der Hebel (342) schwenkbar angeordnet und über eine Einwegkupplung (340) mit der Tonerteilchenzuführrolle (320) verbunden ist, einen drehbaren Nocken (336), eine erste Feder (354), um den Hebel in einer ersten Richtung, in der der Nockenfolger (346) des Hebels (342) in Anlage an den Umfangsrand des Nockens (336) gebracht wird, federnd vorzuspannen, ein Hemmelement (364), das angeordnet ist zur freien Bewegung zwischen einer Betriebsstellung, in der es an dem gehemmten Teil (348) des Hebels (342) anliegt, wenn der durch das Zusammenwirken des Nockens (336) und der ersten Feder (354) hin- und herbewegte Hebel in einer einseitigen Grenzwinkellage gehalten ist, in der der größte Durchmesserteil des Nockens (336) auf den Nockenfolger (346) wirkt, und einer unwirksamen Stellung, in der es sich von dem gehemmten Teil (348) des Hebels (342) wegbewegt, eine zweite Feder (368), um das Hemmelement (264) in die Betriebsstellung federnd vorzuspannen, und eine elektromagnetische Einrichtung (362), die selektiv erregbar ist, um das Hemmelement (364) gegen die federnde Vorspannkraft der zweiten Feder (368) in der unwirksamen Stellung zu halten, wobei die Erregung der elektromagnetischen Einrichtung (362) aufgrund eines von dem Entwicklerdetektor (304) detektierten Werts steuerbar ist.

10. Vorrichtung nach Anspruch 9, dadurch gekennzeichnet, daß der gehemmte Teil (348) des Hebels (342) einen bogenförmigen Rand (350) hat, in dem die Schwenkachse des Hebels (342) als Mittelpunkt gebildet ist, in dem bogenförmigen Rand (350) eine Kerbe (352) ausgebildet ist und das Hemmelement (364) einen Vorsprung aufweist, der mit der Kerbe (352) in Eingriff bringbar ist.

**Revendications**

1. Un dispositif pour développer une image électrostatique latente comprenant un réceptacle de développateur (259) contenant un développateur composé de particules de support et de particules de toner, un moyen d'application du développateur (262) pour tenir à sa surface une partie du développateur dans le réceptacle de développateur dans une zone de laminage du développateur (270) et pour amener le développateur à une zone de développement (274), un organe de réglage de longueur de brosse (278) pour enlever l'excès de développateur de la surface du moyen d'application du développateur (262) disposé à une distance prédéterminée de la surface du moyen d'application du développateur dans une zone de réglage de longueur de brosse disposée en aval de la zone de laminage du développateur et en amont de la zone de développement telles que vues dans la direction de déplacement du développateur porté tout en étant maintenu sur la surface du moyen d'application de développateur (262), un moyen d'agitation du développateur (286) disposé en relation avec une zone d'enlèvement du développateur (276) disposée en aval de la zone de développement et en amont de la zone de laminage du développateur telles que vues dans la direction de déplacement du développateur et de la portion d'extrémité amont de la zone de laminage du développateur, un réceptacle de particules de toner (314) contenant des particules de toner, un moyen d'alimentation en particules de toner (318) agencé pour être actionné sélectivement pour amener des particules de toner au réceptacle de développateur (259) depuis le réceptacle de particules de toner (314) et un détecteur de développateur du type à contact (304) ayant une surface de contact avec le développateur (310), dans lequel la trajectoire de déplacement du développateur porté tout en étant maintenu sur la surface du moyen d'application du développateur (262) est progressivement relevée depuis l'extrémité amont de la zone de laminage du développateur (270) jusqu'au côté amont de la zone de réglage de longueur de brosse (272) telles que vues dans la direction de déplacement du développateur, une plaque de séparation (254) est prévue s'étendant au-dessus de la trajectoire de déplacement du développateur depuis au-dessus du moyen d'agitation du développateur (286) jusqu'au côté amont de la zone de réglage de longueur de brosse (272) de telle sorte que le développateur enlevé de la surface du moyen d'application du développateur (262) par l'action de l'organe de réglage de longueur de brosse (278) dans la zone de réglage de longueur de brosse (272) est conduit sur la plaque de séparation (294) et s'écoule sur elle et tombe finalement dans le moyen d'agitation du développateur (286), et la surface de contact avec le développateur (310) du détecteur de développateur (304) est positionnée de telle manière que le développateur enlevé de la surface du moyen d'application (262) par l'action de l'organe de réglage de longueur de brosse (278) et conduit sur la plaque de séparation (294) vient en contact avec la surface de contact avec le développateur,
caractérisé en ce que la plaque de séparation (294) a une pièce saillante relativement étroite (302) disposée dedans à proximité de la surface du moyen d'application du développateur (262) en amont de la zone de réglage de longueur de brosse (272) et la surface de contact avec le développateur (310) du détecteur de développateur (304) est disposée adjacente à un côté de la pièce saillante (302) telle que vue dans la direction de la largeur.

**2.** Le dispositif de la revendication 1,
caractérisé en ce que le moyen d'application de développateur (262) comprend un organe à manchon cylindrique (266) agencé pour être entraîné en rotation dans une direction prédéterminée autour d'un axe de rotation s'étendant sensiblement horizontalement comme centre et un aimant (268) disposé à l'intérieur de l'organe à manchon (266).

**3.** Le dispositif de la revendication 1 ou 2,
caractérisé en ce que la zone de laminage du développateur (270) est disposée sur une portion latérale de l'organe à manchon (266) et la zone de réglage de longueur de brosse (272) est disposée approximativement à la portion la plus haute de l'organe à manchon (266).

**4.** Le dispositif de l'une des revendications 1 à 3,
caractérisé en ce que la zone de développement (274) est disposée sur l'autre portion latérale de l'organe à manchon (266) et la zone d'enlèvement du développateur (276) est disposée sur ladite première portion latérale de l'organe à manchon (266) et en-dessous de la zone de laminage du développateur (270).

**5.** Le dispositif de l'une des revendications 1 à 4,
caractérisé en ce que le moyen d'agitation du développateur est formé par un mécanisme d'agitation rotatif (286) agencé pour être entraîné en rotation dans la même direction que l'organe à manchon (266).

**6.** Le dispositif de la revendication 5,

caractérisé en ce que le mécanisme d'agitation rotatif (286) a une portion d'arbre rotatif (288) s'étendant sensiblement parallèlement à l'axe de rotation de l'organe à manchon (266), des portions de plaques d'extrémité (290) fixées aux portions d'extrémité opposées de la portion d'arbre rotatif (288) et une pluralité de portions de pales d'agitation (292) espacées circonférentiellement s'étendant en travers des portions de plaques d'extrémité (290), les portions de pales d'agitation (292) étant inclinées vers la face amont dans la direction d'extrémité depuis une extrémité vers l'autre de manière à déplacer le développateur depuis un côté d'extrémité de la portion d'arbre rotatif (288) jusqu'à l'autre, et une pluralité de saillies de guidage (300) écartées les unes des autres dans la direction de la largeur sont disposées dans la surface supérieure de la plaque de séparation (294), lesdites saillies de guidage (300) étant inclinées vers ledit autre côté d'extrémité en direction du mécanisme d'agitation rotatif (286) de manière à déplacer ledit développateur depuis ledit autre côté d'extrémité jusqu'audit premier côté d'extrémité.

**7.** Le dispositif de la revendication 1, caractérisé en ce que la distance entre la pièce saillante (302) et la surface du moyen d'application du développateur (266) est inférieure à la distance entre l'organe de réglage de longueur de brosse (278) et le moyen d'application du développateur (266).

**8.** Le dispositif de l'une des revendications 1 à 7, caractérisé en ce que le réceptacle de particules de toner (314) a une ouverture d'évacuation de particules de toner (316) disposée au-dessus du moyen d'agitation du développateur (286) et le moyen d'alimentation en particules de toner (318) comprend un rouleau d'alimentation en particules de toner (320) disposé rotatif en relation avec l'ouverture d'évacuation de particules de toner (316).

**9.** Le dispositif de la revendication 8, caractérisé par un moyen de commande du rouleau d'alimentation en particules de toner comprenant un organe à levier (342) ayant une portion suiveuse de came (346) et une portion retenue (348), ledit organe à levier (342) étant monté rotatif et connecté au rouleau d'alimentation en particules de toner (320) par l'intermédiaire d'un embrayage unidirectionnel (340), une came (336) agencée pour être entraînée en rotation, un premier moyen à ressort (354) pour rappeler élastiquement l'organe à levier (342) dans une direction dans laquelle la portion suiveuse de came (346) de l'organe à levier (342) est amenée en butée contre le bord périphérique de la came (336), un organe de retenue (364) monté à mouvement libre entre une position active dans laquelle il vient en prise avec la portion retenue (348) de l'organe à levier (342) quand l'organe à levier mis en mouvement alternatif par la coopération de la came (336) et du premier organe à ressort (354) est maintenu à une position angulaire limite latérale dans laquelle la portion de plus grand diamètre de la came (336) agit sur la position suiveuse de came (346), et une position inactive dans laquelle il s'écarte de la portion retenue (348) de l'organe à levier (342), un second moyen à ressort (368) pour rappeler élastiquement l'organe de retenue (364) à la position active, et un moyen électromagnétique (362) agencé pour être excité sélectivement pour maintenir l'organe de retenue (364) à la position inactive contre l'action de rappel élastique du second moyen à ressort (368), l'excitation dudit moyen électromagnétique (362) étant commandée sur la base d'une valeur détectée par le détecteur de développateur (304).

**10.** Le dispositif de la revendication 9, caractérisé en ce que la portion retenue' (348) de l'organe à levier (342) a un bord courbé (350) ayant pour centre l'axe de pivotement de l'organe à levier (342) qui est formé dedans, le bord courbé (350) a une encoche (352) et l'organe de retenue (364) a une saillie agencée pour venir en prise avec l'encoche (352).

FIG. 1

EP 0 265 942 B1

## FIG. 2

FIG. 3

FIG. 4

FIG. 5

FIG. 6

FIG. 7

EP 0 265 942 B1

FIG. 8

FIG. 9